# EUROPEAN PATENT SPECIFICATION

(11) **EP 2 584 161 B1**
(45) Date of publication and mention of the grant of the patent: **06.05.2015**
(21) Application number: 12187759.1
(22) Date of filing: 09.10.2012
(51) Int. Cl.: F01N 3/023, F01N 9/00, F01N 13/04

(54) **Exhaust gas purifier for internal combustion engine**
Abgasreiniger für einen Verbrennungsmotor
Appareil de purification de gaz d'échappement pour moteur à combustion interne

(30) Priority: 20.10.2011 JP 2011230980
(43) Date of publication of application: 24.04.2013
(73) Proprietor: Kabushiki Kaisha Toyota Jidoshokki, Kariya-shi, Aichi 448-8671 (JP); TOYOTA JIDOSHA KABUSHIKI KAISHA, Toyota-shi, Aichi-ken, 471-8571 (JP)
(72) Inventor: Okamura, Masaaki, Kariya-shi, Aichi 448-8671 (JP); Takahashi, Yoshiyuki, Kariya-shi, Aichi 448-8671 (JP); Murata, Dai, Kariya-shi, Aichi 448-8671 (JP); Amaike, Masaaki, Kariya-shi, Aichi 448-8671 (JP)
(74) Representative: TBK

(56) References cited:
- EP-A1- 1 715 150
- EP-A1- 1 795 721
- EP-A1- 1 947 306
- WO-A1-2006/095917

## Description

### Technical Field

The present invention relates to an exhaust gas purifier for an internal combustion engine having a plurality of cylinder groups.

### Background Art

One of known exhaust gas purifiers for an internal combustion engine having a plurality of cylinder groups is, for example, the exhaust gas purifier described in Patent Literature 1. The exhaust gas purifier described in Patent Literature 1 is configured to calculate PM (Particulate Matter) accumulation amounts in respective DPNRs (Diesel Particulate NOₓ Reduction systems, that is, NOₓ catalyst - supported PM filters) and to execute regeneration control to regenerate PM when the calculated PM accumulation amounts are not less than a predetermined amount. In the exhaust gas purifier, after completion of the regeneration of PM, the regeneration control is terminated in a bank for which the regeneration of PM is completed.

### Citation List

### Patent Literature

Patent Literature 1: Japanese Patent Application Laid-open No. 2006-249961

### Summary of Invention

### Technical Problem

In the case of the exhaust gas purifier for the internal combustion engine as described above, there are desires for suppression of reduction of fuel efficiency of the internal combustion engine. However, the above exhaust gas purifier occasionally performs such regeneration control as to simultaneously terminate the regeneration processes of PM. In this case, the ordinary regeneration control is carried out for DPNR of a bank for which regeneration is completed earlier, and thus the resultant suppression effect of reduction of fuel efficiency is not fully satisfactory.

It is an object of the present invention to provide an exhaust gas purifier for an internal combustion engine capable of suppressing the reduction of fuel efficiency of the internal combustion engine.

### Solution to Problem

The present invention provides an exhaust gas purifier for an internal combustion engine having a plurality of cylinder groups, comprising: a plurality of exhaust passages connected to the respective cylinder groups; a plurality of exhaust purifying units arranged in the respective exhaust passages and configured to collect particulate matter discharged from the internal combustion engine; a plurality of regenerating means to supply fuel to the respective exhaust purifying units to bum the particulate matter accumulated in the respective exhaust purifying units, thereby to regenerate the exhaust purifying units; a plurality of accumulation amount detecting means to detect particulate matter accumulation amounts in the respective exhaust purifying units; regeneration temperature determining means which, in regeneration of the plurality of exhaust purifying units by the plurality of regenerating means, determines target regeneration temperatures of the respective exhaust purifying units, based on the particulate matter accumulation amounts in the respective exhaust purifying units detected by the respective accumulation amount detecting means; controlling means to control each of the regenerating means according to the target regeneration temperatures of the respective exhaust purifying units determined by the regeneration temperature determining means, when the accumulation amount detecting means detect that the particulate matter accumulation amounts in the respective exhaust purifying units reach a regeneration start threshold; and determination means to determine whether the particulate matter accumulation amounts in the respective exhaust purifying units detected by the respective accumulation amount detecting means are smaller than a predetermined amount, wherein the regeneration temperature determining means has temperature changing means which, when the determination means determines that the particulate matter accumulation amount in the exhaust purifying unit is smaller than the predetermined amount, decreases the target regeneration temperature of the exhaust purifying unit for which the particulate matter accumulation amount is determined to be smaller than the predetermined amount, to within a temperature range available for the regeneration of the exhaust purifying units.

In the present invention, the target regeneration temperatures of the respective exhaust purifying units are determined based on the particulate matter accumulation amounts in the respective exhaust purifying units and the fuel is supplied in quantities according to the target regeneration temperatures of the respective exhaust purifying units, to the respective exhaust purifying units. This starts the regeneration process of each exhaust purifying unit. The particulate matter accumulated in each exhaust purifying unit is burned, so as to reduce the particulate matter accumulation amount in each exhaust purifying unit. When the particulate matter accumulation amount in any one of the exhaust purifying units becomes smaller than the predetermined amount, the target regeneration temperature of the exhaust purifying unit is forcibly reduced to within the temperature range available for the regeneration of the exhaust purifying units. For the exhaust purifying unit with the particulate matter accumulation amount becoming smaller than the predetermined amount, the regeneration process is continued in a state in which the target regeneration temperature is forcibly reduced to within the aforementioned temperature range. When the target regeneration temperature of the exhaust purifying unit is forcibly reduced, a quantity of fuel supplied to the exhaust purifying unit is reduced. As a result, the reduction of fuel efficiency of the internal combustion engine can be suppressed.

The controlling means may have means to control the regenerating means so as to simultaneously terminate supplies of fuel to the respective exhaust purifying units, when the determination means determines that all of the particulate matter accumulation amounts in the respective exhaust purifying units are smaller than the predetermined amount.

If regeneration completion times of the plurality of exhaust purifying units are different, the particulate matter will start to accumulate earlier in the exhaust purifying unit for which the regeneration is first completed. For this reason, the next regeneration start time will be determined according to the particulate matter accumulation amount in the exhaust purifying unit for which the regeneration is first completed. In this case, an interval from a regeneration end time of all the exhaust purifying units to a next regeneration start time will become shorter, to increase regeneration frequency of the exhaust purifying units. By simultaneously terminating the supplies of fuel into the respective exhaust purifying units when all of the particulate matter accumulation amounts in the respective exhaust purifying units are determined to be smaller than the predetermined amount, the regeneration processes of the respective exhaust purifying units are also simultaneously terminated. In this case, the particulate matter starts to again accumulate in the respective exhaust purifying units at the same time and the next regeneration start time is delayed by that degree. Therefore, the interval becomes longer from the regeneration end time of all the exhaust purifying units to the next regeneration start time, so as to decrease the regeneration frequency of the exhaust purifying units, which decreases the total quantity of fuel supplied to the exhaust purifying units. This can further suppress the reduction of fuel efficiency of the internal combustion engine.

When the determination means determines that the particulate matter accumulation amount in the exhaust purifying unit is larger than the predetermined amount, the regeneration temperature determining means may set the target regeneration temperature of the exhaust purifying unit in accordance with the particulate matter accumulation amount in the exhaust purifying unit.

In this case, the target regeneration temperature of each exhaust purifying unit is set to the optimal temperature according to the particulate matter accumulation amount in the exhaust purifying unit. For example, the target regeneration temperature of the exhaust purifying unit is set higher with decrease in particulate matter accumulation amount in the exhaust purifying unit. This can prevent thermal runaway with a large particulate matter accumulation amount. Since the exhaust purifying unit is regenerated earlier with a small particulate matter accumulation amount, it can contribute to suppression of the reduction of fuel efficiency of the internal combustion engine.

When the determination means determines that the particulate matter accumulation amount in the exhaust purifying unit is smaller than the predetermined amount, the temperature changing means may decrease the target regeneration temperature of the exhaust purifying unit for which the particulate matter accumulation amount is determined to be smaller than the predetermined amount, to a lowest temperature to bum the particulate matter.

In this case, when the particulate matter accumulation amount in the exhaust purifying unit is determined to be smaller than the predetermined amount, the quantity of fuel supplied to the exhaust purifying unit is reduced to a requisite minimum. This can further suppress the reduction of fuel efficiency of the internal combustion engine.

### Advantageous Effect of Invention

The present invention suppresses the wasteful supply of fuel to the exhaust purifying units and thus suppresses the reduction of fuel efficiency of the internal combustion engine.

### Brief Description of Drawings

Fig. 1 is a schematic configuration diagram showing an internal combustion engine with an exhaust gas purifier according to an embodiment of the present invention.
Fig. 2 is a flowchart showing a processing procedure executed by ECU.
Fig. 3 is a graph showing an example of a regeneration temperature setting map.
Fig. 4 is graphs showing an example of relations of time to PM accumulation amount in DPF and target regeneration temperature correction coefficient, in an embodiment of the present invention.
Fig. 5 is graphs showing an example of relations of time to PM accumulation amount in DPF and target regeneration temperature correction coefficient, in a first comparative example.
Fig. 6 is graphs showing an example of relations of time to PM accumulation amount in DPF, in a second comparative example and the embodiment of the present invention.

### Description of Embodiments

The preferred embodiments of the present invention will be described below in detail with reference to the accompanying drawings.

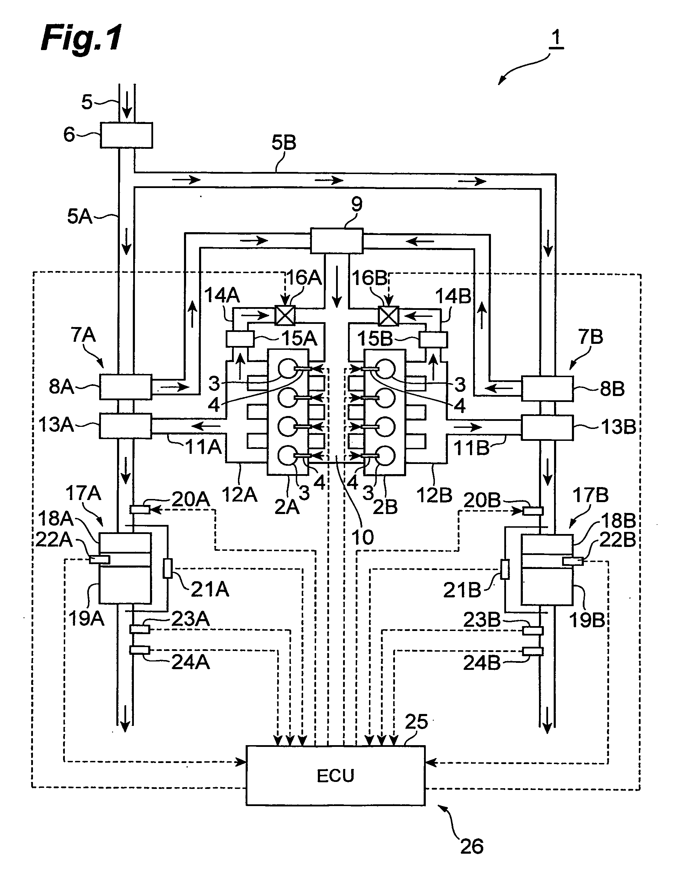

Fig. 1 is a schematic configuration diagram showing an internal combustion engine equipped with an exhaust gas purifier according to an embodiment of the present invention. In the same drawing, the internal combustion engine 1 is configured as a V-eight diesel engine.

The diesel engine 1 is provided with left and right banks 2A, 2B, and four cylinders 3 are arranged in each of the banks 2A, 2B. The four cylinders 3 in the bank 2A constitute one cylinder group 3A and the four cylinders 3 in the bank 2B constitute another cylinder group 3B. Each cylinder 3 is provided with a fuel injection valve 4 to inject fuel into a combustion chamber.

The diesel engine 1 is provided with an intake passage 5 for supplying air to each of the cylinders 3. The intake passage 5 is bifurcated into a pair of intake branch passages 5A, 5B downstream of an air cleaner 6. The intake branch passages 5A, 5B are equipped with respective compressors 8A, 8B of turbochargers 7A, 7B. Each intake branch passage 5A, 5B is connected through an intercooler 9 to an intake manifold 10. Each intake manifold 10 is coupled to the corresponding bank 2A or 2B.

Exhaust passages 11A, 11B for discharging exhaust gas after combustion from each cylinder 3 are connected to the respective banks 2A, 2B through exhaust manifolds 12A, 12B, respectively. The exhaust passages 11A, 11B are equipped with respective turbines 13A, 13B of the turbochargers 7A, 7B.

Each of the exhaust manifolds 12A, 12B is connected to the intake manifold 10 through an exhaust gas recirculation (EGR) passage 14A or 14B. The EGR passages 14A, 14B are passages for recirculating part of exhaust gas after combustion to each cylinder 3, as EGR gas. The EGR passages 14A, 14B are equipped with respective EGR coolers 15A, 15B for cooling the EGR gas, and with respective EGR valves 16A, 16B for regulating the recirculation quantity of EGR gas.

Exhaust purifying units 17A, 17B are arranged on the downstream side of the respective turbochargers 7A, 7B in the exhaust passages 11A, 11B. Each exhaust purifying unit 17A, 17B has a diesel oxidation catalyst (DOC) 18A or 18B and a diesel particulate filter (DPF) 19A or 19B. The diesel oxidation catalysts 18A, 18B remove particulate matter (PM) from exhaust gas by catalysis (oxidation). The diesel particulate filters 19A, 19B collect and remove PM from exhaust gas.

Fuel addition valves 20A, 20B to add fuel into the exhaust passages 11A, 11B are arranged between the turbines 13A, 13B and the exhaust purifying units 17A, 17B in the exhaust passages 11A, 11B, respectively. The fuel added from the fuel addition valves 20A, 20B is used mainly as a reducing agent in execution of regeneration control of DPFs 19A, 19B. Regeneration of DPFs 19A, 19B is to oxidize (or bum) PM accumulated in DPFs 19A, 19B by hot fuel. Each fuel addition valve 20A, 20B supplies the fuel to corresponding DOC 18A, 18B to activate each DOC 18A, 18B. This increases the temperature of exhaust gas to bum the particulate matter accumulated in DPFs 19A, 19B. Each fuel addition valve 20A, 20B constitutes regenerating means to regenerate corresponding DPF 19A, 19B.

Differential pressure sensors 21A, 21B to detect differential pressures before and after the exhaust purifying units 17A, 17B are connected to the exhaust passages 11A, 11B, respectively. Exhaust temperature sensors 22A, 22B to detect temperatures of exhaust gases are arranged between DOCs 18A, 18B and DPFs 19A, 19B in the exhaust purifying units 17A, 17B, respectively. Exhaust temperature sensors 23A, 23B to detect temperatures of exhaust gases and air-fuel ratio sensors 24A, 24B to detect air-fuel ratios (A/F) of exhaust gases are arranged on the downstream side of the exhaust purifying units 17A, 17B in the exhaust passages 11A, 11B, respectively.

The diesel engine 1 is provided with an electronic control unit (ECU) 25. ECU 25 receives detected signals from the differential pressure sensors 21A, 21B, exhaust temperature sensors 22A-23B, and air-fuel ratio sensors 24A, 24B, performs predetermined processing, and controls each of the fuel injection valves 4, EGR valves 16A, 16B, and fuel addition valves 20A, 20B.

The exhaust purifying units 17A, 17B, fuel addition valves 20A, 20B, differential pressure sensors 21A, 21B, exhaust temperature sensors 22A-23B, air-fuel ratio sensors 24A, 24B, and ECU 25 constitute the exhaust gas purifier 26 of the present embodiment.

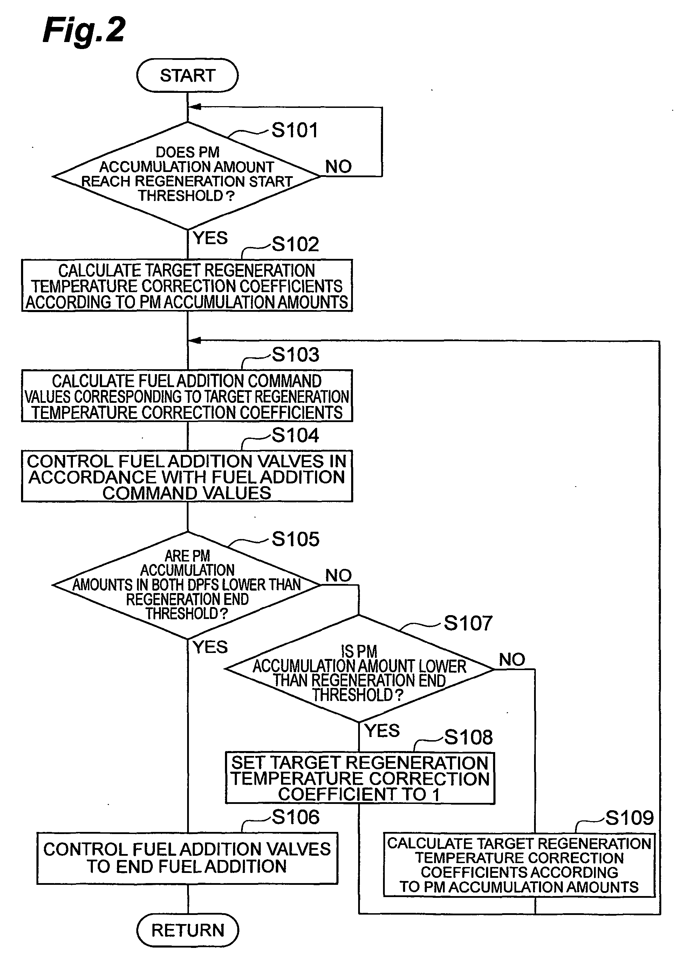

Fig. 2 is a flowchart showing a processing procedure executed by ECU 25. The present processing is to individually set target regeneration temperatures of DPFs 19A, 19B on the basis of amounts of PM accumulated in DPFs 19A, 19B (PM accumulation amounts) and to control each of the fuel addition valves 20A, 20B in accordance with the set target regeneration temperatures. The regeneration temperatures are catalyst bed temperatures of DPFs 19A, 19B during the regeneration ofDPFs 19A, 19B.

First, ECU 25 determines whether the PM accumulation amounts in DPFs 19A, 19B reach a regeneration start threshold (S101). The PM accumulation amounts in DPFs 19A, 19B can be calculated based on the differential pressures before and after DPFs 19A, 19B detected by the differential pressure sensors 21A, 21B. The regeneration start threshold is a threshold for a start of regeneration of DPFs 19A, 19B and is determined by a tolerable accumulation amount of PM in DPFs 19A, 19B. The determination on a start of regeneration is made by whether at least one of the PM accumulation amounts in DPFs 19A, 19B reaches the regeneration start threshold.

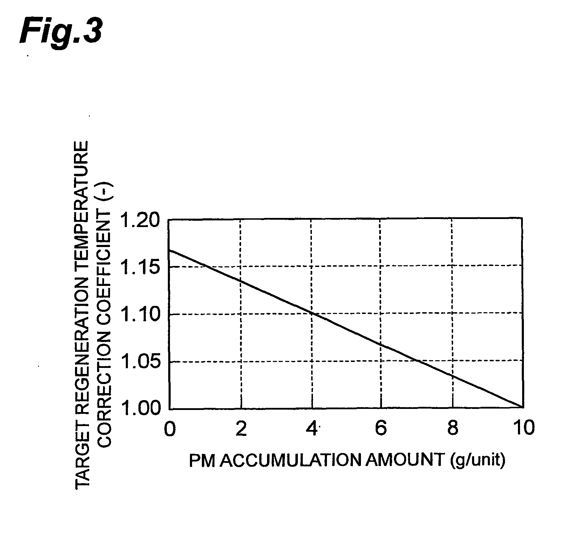

When ECU 25 determines that the PM accumulation amount in DPF 19A, 19B reaches the regeneration start threshold, ECU 25 calculates each of target regeneration temperature correction coefficients according to the PM accumulation amounts in DPFs 19A, 19B, in order to start regeneration of DPFs 19A, 19B (S102). The calculation of the target regeneration temperature correction coefficients according to PM accumulation amounts is performed using a regeneration temperature setting map as shown in Fig. 3. The regeneration temperature setting map is a map showing a relation of PM accumulation amount against target regeneration temperature correction coefficient. In the regeneration temperature setting map, the target regeneration temperature correction coefficient is set to increase with decrease in PM accumulation amount.

The target regeneration temperature correction coefficient corresponds to a target regeneration temperature. For example, when the target regeneration temperature correction coefficient is 1, the target regeneration temperature is 550°C. In this case, 550°C is the lowest temperature for regeneration of DPFs 19A, 19B through secure oxidation (burning) of PM accumulated in DPFs 19A, 19B.

Next, ECU 25 calculates fuel addition command values corresponding to the target regeneration temperature correction coefficients acquired by the process in S102 (step S103). The calculation of the fuel addition command values is performed using a dedicated map not shown. Then ECU 25 controls the fuel addition valves 20A, 20B so as to add the fuel in quantities according to the calculated fuel addition command values (S104). At this time, ECU 25 may control the fuel addition valves 20A, 20B, also taking into account the temperatures of exhaust gases detected by the exhaust temperature sensors 22A-23B and the air-fuel ratios of exhaust gases detected by the air-fuel ratio sensors 24A, 24B.

Next, ECU 25 determines whether the PM accumulation amounts in both DPFs 19A, 19B become lower than a regeneration end threshold (S105). The regeneration end threshold is a predetermined value of PM accumulation amount for ending the regeneration of DPFs 19A, 19B, for example, zero or a value α close to zero. When ECU 25 determines that the PM accumulation amounts in both DPFs 19A, 19B become lower than the regeneration end threshold, ECU 25 controls the fuel addition valves 20A, 20B to terminate the addition of fuel (S106). This terminates the present processing.

When ECU 25 determines that the PM accumulation amounts in two DPFs 19A, 19B are not smaller than the regeneration end threshold, ECU 25 determines whether the PM accumulation amount in DPF 19A or DPF 19B is lower than the regeneration end threshold (S107). When ECU 25 determines that the PM accumulation amount in DPF 19A or DPF 19B is lower than the regeneration end threshold, ECU 25 sets 1 as the target regeneration temperature correction coefficient for DPF 19A or 19B below the regeneration end threshold (S108). At this time, ECU 25 calculates the target regeneration temperature correction coefficient for DPF 19A or 19B above the regeneration end threshold in accordance with the PM accumulation amount, using the regeneration temperature setting map shown in Fig. 3, in the same manner as in the process of S102. Thereafter, ECU 25 returns to the process in S103.

When ECU 25 determines that the PM accumulation amounts in DPF 19A and DPF 19B are not lower than the regeneration end threshold, ECU 25 calculates the respective target regeneration temperature correction coefficients for DPFs 19A, 19B (S109). The target regeneration temperature correction coefficients are calculated in accordance with the respective PM accumulation amounts in DPFs 19A, 19B, using the regeneration temperature setting map shown in Fig. 3, in the same manner as in the process of S 102.

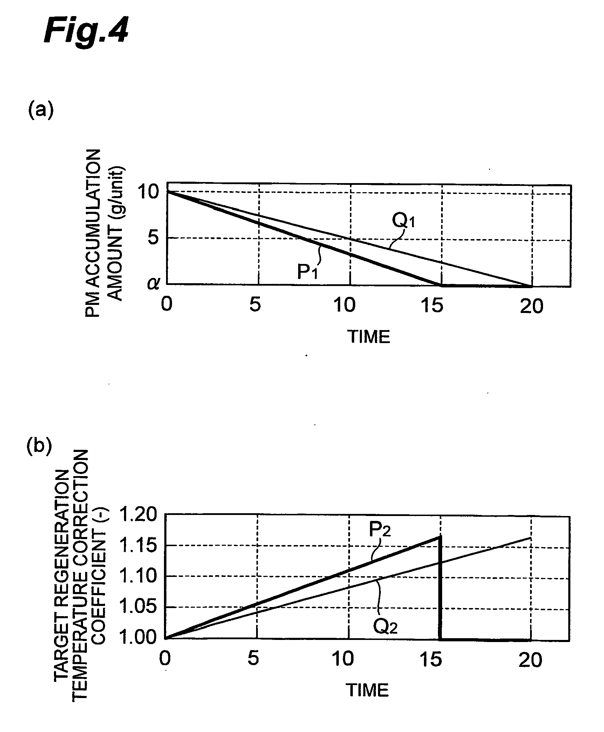

Next, the operation of the exhaust gas purifier 26 of the present embodiment will be described with Fig. 4. In (a) of Fig. 4, thick solid line P₁ indicates the PM accumulation amount in DPF 19A and thin solid line Q₁ indicates the PM accumulation amount in DPF 19B. In (b) of Fig. 4, thick solid line P₂ indicates the target regeneration temperature correction coefficient for DPF 19A and thin solid line Q₂ indicates the target regeneration temperature correction coefficient for DPF 19B.

When the PM accumulation amounts in DPFs 19A, 19B reach the regeneration start threshold, the regeneration control of DPFs 19A, 19B is started. Namely, using the regeneration temperature setting map shown in Fig. 3, the target regeneration temperatures (corresponding to the target regeneration temperature correction coefficients) are individually set according to the PM accumulation amounts in respective DPFs 19A, 19B. Fuel is added in quantities according to the set target regeneration temperatures by the corresponding fuel addition valves 20A, 20B. Through these, the regeneration temperatures of DPFs 19A, 19B become temperatures corresponding to the target regeneration temperatures to bum PM accumulated in DPFs 19A, 19B. The PM accumulation amounts in DPFs 19A, 19B gradually decrease as shown in (a) of Fig. 4.

The regeneration temperature setting map is set so as to increase the target regeneration temperature with decrease in PM accumulation amount. For this reason, as shown in (b) of Fig. 4, the regeneration temperatures of DPFs 19A, 19B increase with decrease in PM accumulation amounts in DPFs 19A, 19B.

If the regeneration temperatures of DPFs 19A, 19B become higher with large PM accumulation amounts in DPFs 19A, 19B, thermal runaway becomes more likely to occur. However, since the regeneration temperatures of DPFs 19A, 19B are set to increase with decrease in PM accumulation amounts in DPFs 19A, 19B, the thermal runaway can be prevented. With decrease in PM accumulation amounts in DPFs 19A, 19B, DPFs 19A, 19B are regenerated quicker. This can contribute to suppression of the reduction of fuel efficiency.

In the example shown in Fig. 4, the PM accumulation amount in DPF 19A is smaller than that in DPF 19B. Therefore, after the start of regeneration control, the PM accumulation amount in DPF 19A becomes smaller than the regeneration end threshold α earlier than the PM accumulation amount in DPF 19B. When the PM accumulation amount in DPF 19A becomes smaller than the regeneration end threshold (cf. thick solid line P₁), the target regeneration temperature of DPF 19A is forcibly reduced to the temperature corresponding to the target regeneration temperature correction coefficient 1, i.e., the lowest temperature to bum PM (cf. thick solid line P₂). Then the regeneration control of DPF 19A is continued in a state in which the target regeneration temperature of DPF 19A is forcibly reduced to the lowest temperature. For this reason, the PM accumulation amount in DPF 19A does not increase.

Thereafter, when the PM accumulation amount in DPF 19B becomes lower than the regeneration end threshold α, the regeneration controls of DPFs 19A, 19B are terminated at the same time. Namely, the addition processes of fuel from the fuel addition valves 20A, 20B are stopped at the same time.

In the above configuration, the differential pressure sensors 21 A, 21B constitute a plurality of accumulation amount detecting means to detect respective particulate matter accumulation amounts in the respective exhaust purifying units 17A, 17B. ECU 25 constitutes regeneration temperature determining means to individually determine the target regeneration temperatures of the respective exhaust purifying units 17A, 17B on the basis of the particulate matter accumulation amounts in the respective exhaust purifying units 17A, 17B detected by the accumulation amount detecting means (differential pressure sensors 21A, 21B), in the regeneration of the exhaust purifying units 17A, 17B by the respective regenerating means (respective fuel addition valves 20A, 20B). ECU 25 constitutes controlling means to control each of the regenerating means (fuel addition valves 20A, 20B) in accordance with the target regeneration temperature of each exhaust purifying unit 17A, 17B determined by the regeneration temperature determining means. ECU 25 constitutes determination means to determine whether the particulate matter accumulation amounts in the respective exhaust purifying units 17A, 17B detected by the respective accumulation amount detecting means (respective differential pressure sensors 21A, 21B) are smaller than the predetermined amount. ECU 25 (particularly, the processes in S102, S108, and S109) functions as the regeneration temperature determining means. ECU 25 (particularly, the processes in S 103, S 104, and S 106) functions as the controlling means. ECU 25 (particularly, the processes in S105 and S107) functions as the determination means.

ECU 25 (particularly, the process in S108) functions as temperature changing means which, when the determination means determines that the particulate matter accumulation amount in the exhaust purifying unit 17A or 17B is smaller than the predetermined amount, decreases the target regeneration temperature of the exhaust purifying unit 17A or 17B for which the particulate matter accumulation amount is determined to be smaller than the predetermined amount, to within a temperature range available for the regeneration of the exhaust purifying units 17A, 17B. ECU 25 (particularly, the process in S109) functions as means which, when the determination means determines that the particulate matter accumulation amount in the exhaust purifying unit 17A or 17B is larger than the predetermined amount, sets the target regeneration temperature of the exhaust purifying unit 17A or 17B for which the particulate matter accumulation amount is determined to be larger than the predetermined amount, in accordance with the particulate matter accumulation amount in the exhaust purifying unit 17A or 17B. ECU 25 (particularly, the process in S106) functions as means to control the regenerating means 20A, 20B so as to simultaneously end the supplies of fuel to the respective exhaust purifying units 17A, 17B, when the determination means determines that both of the particulate matter accumulation amounts in the respective exhaust purifying units 17A, 17B are smaller than the predetermined amount.

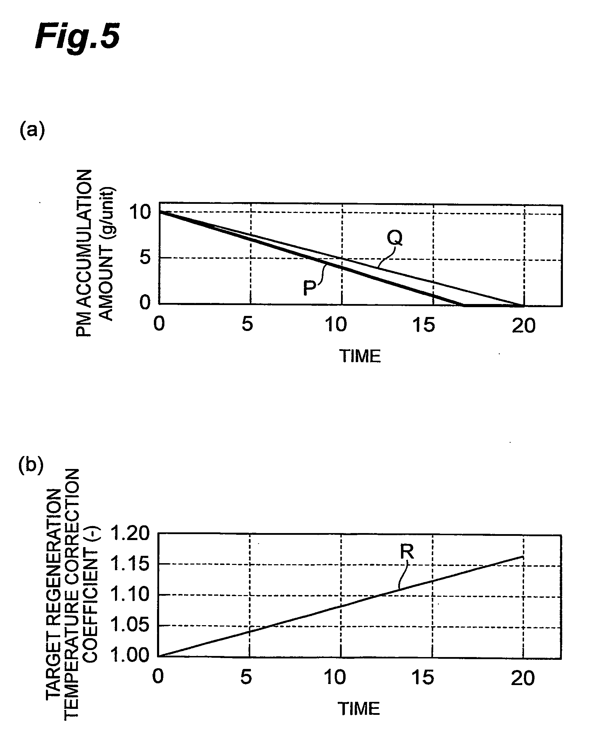

The operational effect of the present embodiment will be described below in comparison with first and second comparative examples. In the first comparative example, as shown in Fig. 5, the respective target regeneration temperatures of DPFs 19A, 19B are not individually set, but the respective target regeneration temperatures of DPFs 19A, 19B are set equal. In (a) of Fig. 5, thick solid line P indicates the PM accumulation amount in DPF 19A and thin solid line Q the PM accumulation amount in DPF 19B. In (b) of Fig. 5, solid line R indicates the target regeneration temperature correction coefficient for DPFs 19A and 19B. The first comparative example employs the target regeneration temperature correction coefficient according to DPF 19A or 19B with the larger PM accumulation amount out of DPF 19A and DPF 19B.

In the first comparative example, the PM accumulation amount in DPF 19B is larger than that in DPF 19A. Therefore, the target regeneration temperature according to the PM accumulation amount in DPF 19B is set as the target regeneration temperature of DPFs 19A and 19B, and the fuel is added in a quantity according to this target regeneration temperature from the respective fuel addition valves 20A, 20B into the exhaust passages 11A, 11B. This operation results in executing the regeneration controls of DPFs 19A, 19B.

In the first comparative example, the target regeneration temperature of DPF 19A with the smaller PM accumulation amount is not set higher, and thus the regeneration of DPF 19A takes more time. Although DPF 19A is in a status in which the regeneration control of DPF 19A can be terminated because the PM accumulation amount in DPF 19A is smaller than the regeneration end threshold, the addition of fuel is continued according to the high target regeneration temperature according to the PM accumulation amount in DPF 19B. Therefore, the fuel is wastefully added, so as to enlarge the reduction of fuel efficiency.

In contrast to it, in the present embodiment, as shown in Fig. 4, the target regeneration temperature of DPF 19A with the smaller PM accumulation amount is set higher than that of DPF 19B with the larger PM accumulation amount, which reduces the time necessary for the regeneration of DPF 19A. Therefore, the PM accumulation amount in DPF 19A becomes smaller than the regeneration end threshold earlier. When the PM accumulation amount in DPF 19A becomes smaller than the regeneration end threshold earlier than that in DPF 19B, the target regeneration temperature of DPF 19A is forcibly reduced to the lowest temperature to bum PM. For this reason, the addition of fuel according to the higher target regeneration temperature is not continued, which can suppress wasteful fuel addition.

Next, the second comparative example will be described. In the second comparative example, when the PM accumulation amount in DPF 19A or 19B becomes smaller than the regeneration end threshold, the regeneration control of DPF 19A or 19B with the PM accumulation amount becoming smaller than the regeneration end threshold is individually terminated immediately. In this case, after completion of the regeneration control of DPF 19A or 19B, the PM accumulation amount in DPF 19A or 19B again increases from the point of completion, which raises the following problem. In the second comparative example, as in the present embodiment, the determination on a start of regeneration is also made by whether the PM accumulation amount in at least one of DPFs 19A, 19B reaches the regeneration start threshold.

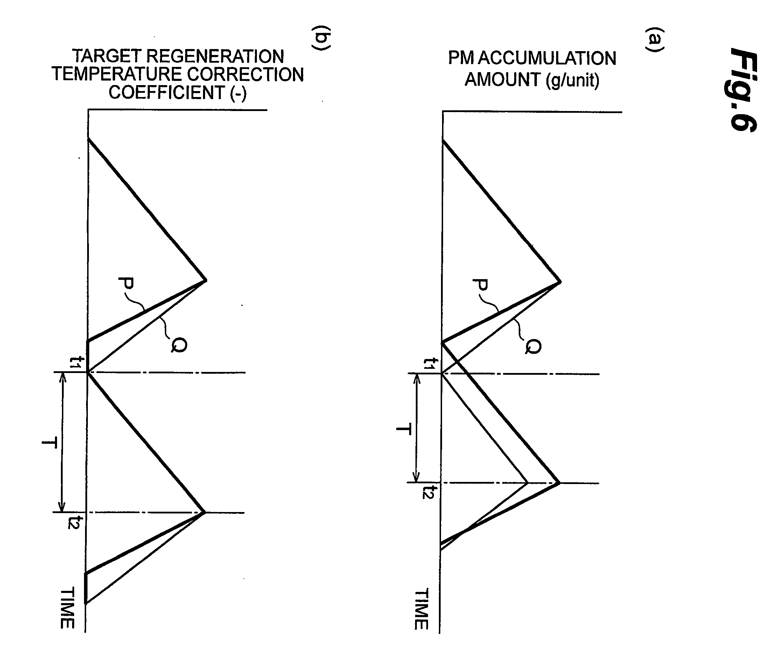

Specifically, for example, as shown in (a) of Fig. 6, when the PM accumulation amount in DPF 19A (cf. thick solid line P) becomes lower than the regeneration end threshold earlier than the PM accumulation amount in DPF 19B (cf. thin solid line Q), accumulation of PM in DPF 19A starts earlier than accumulation of PM in DPF 19B. For this reason, a time when the PM accumulation amount in DPF 19A next reaches the regeneration start threshold becomes earlier than a time when the PM accumulation amount in DPF 19B next reaches the regeneration start threshold. The next regeneration start request timing is the time when the PM accumulation amount in DPF 19A reaches the regeneration start threshold. In this case, interval T is short from a regeneration end point t₁ of DPF 19B to a next regeneration start point t₂ of DPFs 19A, 19B, which increases the regeneration frequency of DPFs 19A, 19B. Therefore, it results in increase in addition time and addition amount of fuel to DPFs 19A, 19B. For this reason, the fuel is wastefully added, so as to enlarge the reduction of fuel efficiency.

In contrast to it, in the present embodiment, as shown in (b) of Fig. 6, when the PM accumulation amount in DPF 19A (cf thick solid line P) becomes smaller than the regeneration end threshold earlier than the PM accumulation amount in DPF 19B (cf. thin solid line Q), the target regeneration temperature of DPF 19A is forcibly reduced to the lowest temperature to burn PM and the regeneration control of DPF 19A is continued. When the PM accumulation amount in DPF 19B becomes smaller than the regeneration end threshold, the regeneration controls of DPFs 19A, 19B are terminated at the same time. Therefore, accumulation of PM starts simultaneously in DPFs 19A, 19B. For this reason, a time when the PM accumulation amount in DPF 19A next reaches the regeneration start threshold becomes later and the next regeneration start request timing becomes later by that degree in the present embodiment than in the second comparative example. Namely, interval T becomes longer from a regeneration end point t₁ of DPFs 19A, 19B to a next regeneration start point t₂ of DPFs 19A, 19B, so as to decrease the regeneration frequency of DPFs 19A, 19B. This operation decreases the addition time and addition amount of fuel to the DPFs 19A, 19B, so as to suppress wasteful fuel addition.

As described above, the present embodiment reduces the wasteful fuel addition to DPFs 19A, 19B by the fuel addition valves 20A, 20B and thus enables suppression of the reduction of fuel efficiency of the diesel engine 1.

The present invention is by no means limited to the above-described embodiment. For example, the present embodiment is configured so that when the PM accumulation amount in either DPF 19A or 19B out of DPFs 19A, 19B becomes smaller than the regeneration end threshold, the target regeneration temperature of DPF 19A or 19B with the PM accumulation amount becoming smaller than the regeneration end threshold is reduced to the lowest temperature to oxidize (or burn) PM, but the present invention is not limited to this. It is sufficient that the target regeneration temperature of DPF 19A or 19B with the PM accumulation amount becoming smaller than the regeneration end threshold be forcibly reduced to within a temperature range available for the regeneration of DPFs 19A, 19B.

The present embodiment is configured so that when the PM accumulation amount in other DPF 19B or 19A becomes smaller than the regeneration end threshold after the forcible reduction of the target regeneration temperature of DPF 19A or 19B with the PM accumulation amount becoming smaller than the regeneration end threshold, the regeneration controls of DPFs 19A, 19B are terminated simultaneously, but the present invention is not limited to this. For example, the regeneration control of DPF 19A or 19B subjected to the forcible reduction of the target regeneration temperature may be terminated prior to the other.

The present embodiment is configured so that when the PM accumulation amounts in DPFs 19A, 19B are not smaller than the regeneration end threshold, the target regeneration temperatures vary according to the PM accumulation amounts in DPFs 19A, 19B, but the present invention is not limited to this. For example, when the PM accumulation amounts in DPFs 19A, 19B are not smaller than the regeneration end threshold, the target regeneration temperatures of DPFs 19A, 19B may be set at a fixed value.

The present embodiment is configured to perform the regeneration controls of DPFs 19A, 19B by adding the fuel from the fuel addition valves 20A, 20B to activate DOCs 18A, 18B, but the regeneration control technique of DPFs 19A, 19B is not limited to this. DOCs 18A, 18B may be activated by post-injection of fuel by fuel injection valves 4 or the like. The exhaust gas temperatures may be increased by burning added fuel by burners, glow plugs, or the like, instead of DOCs.

The internal combustion engine 1 in the present embodiment is the V-eight diesel engine, but it should be noted that the present invention can be applied to any internal combustion engine having a plurality of cylinder groups.

### Industrial Applicability

The present invention is applicable to the exhaust gas purifiers for V-type multi-cylinder diesel engines.

### Reference Signs List

1 diesel engine (internal combustion engine); 2A, 2B banks; 3 cylinders; 4 fuel injection valves (regenerating means); 11A, 11B exhaust passages; 17A, 17B exhaust purifying units; 20A, 20B fuel addition valves (regenerating means); 21A, 21B differential pressure sensors (accumulation amount detecting means); 25 ECU

(determination means, regeneration temperature determining means, controlling means, and temperature changing means); 26 exhaust gas purifier.

## Claims

1. An exhaust gas purifier (26) for an internal combustion engine (1) having a plurality of cylinder groups, comprising:
a plurality of exhaust passages (11A, 11B) connected to the respective cylinder groups;
a plurality of exhaust purifying units (17A, 17B) arranged in the respective exhaust passages (11A, 11B) and configured to collect particulate matter discharged from the internal combustion engine (1);
a plurality of regenerating means (20A, 20B) to supply fuel to the respective exhaust purifying units (18A, 18B) to burn the particulate matter accumulated in the respective exhaust purifying units (19A, 19B), thereby to regenerate the exhaust purifying units (19A, 19B);
a plurality of accumulation amount detecting means (21A, 21B) to detect particulate matter accumulation amounts in the respective exhaust purifying units (19A, 19B);
regeneration temperature determining means (25) which, in regeneration of the plurality of exhaust purifying units (19A, 19B) by the plurality of regenerating means (20A, 20B), determines target regeneration temperatures of the respective exhaust purifying units (19A, 19B), based on the particulate matter accumulation amounts in the respective exhaust purifying units (19A, 19B) detected by the respective accumulation amount detecting means (2 1 A, 2 1 B);
controlling means (25) to control each of the regenerating means (20A, 20B) according to the target regeneration temperatures of the respective exhaust purifying units (19A, 19B) determined by the regeneration temperature determining means (25), when the accumulation amount detecting mean (21A, 21B) detect that the particulate matter accumulation amounts in the respective exhaust purifying units (19A, 19B) reach a regeneration start threshold; and
determination means (25) to determine whether the particulate matter accumulation amounts in the respective exhaust purifying units (19A, 19B) detected by the respective accumulation amount detecting means (21A, 21B) are smaller than a predetermined amount, **characterized in that**
the regeneration temperature determining means (25) has temperature changing means (25) which, when the determination means (25) determines that the particulate matter accumulation amount in the exhaust purifying unit (19A, 19B) is smaller than the predetermined amount, decreases the target regeneration temperature of the exhaust purifying unit (19A, 19B) for which the particulate matter accumulation amount is determined to be smaller than the predetermined amount, to within a temperature range available for the regeneration of the exhaust purifying units (19A, 19B).

2. The exhaust gas purifier (26) for the internal combustion engine (1) according to claim 1,
wherein the controlling means (25) has means (25) which, when the determination means (25) determines that all of the particulate matter accumulation amounts in the respective exhaust purifying units (19A, 19B) are smaller than the predetermined amount, controls the regenerating means (20A, 20B) so as to simultaneously terminate supplies of fuel to the respective exhaust purifying units (19A, 19B).

3. The exhaust gas purifier (26) for the internal combustion engine (1) according to claim 1 or 2,
wherein when the determination means (25) determines that the particulate matter accumulation amount in the exhaust purifying unit (19A, 19B) is larger than the predetermined amount, the regeneration temperature determining means (25) sets the target regeneration temperature of the exhaust purifying unit (19A, 19B) in accordance with the particulate matter accumulation amount in said exhaust purifying unit (19A, 19B).

4. The exhaust gas purifier (26) for the internal combustion engine (1) according to claim 3,
wherein when the determination means (25) determines that the particulate matter accumulation amount in the exhaust purifying unit (19A, 19B) is smaller than the predetermined amount, the temperature changing means (25) decreases the target regeneration temperature of the exhaust purifying unit (19A, 19B) for which the particulate matter accumulation amount is determined to be smaller than the predetermined amount, to a lowest temperature to bum the particulate matter.

## Patentansprüche

1. Abgasreiniger (26) für eine Brennkraftmaschine (1), die eine Vielzahl von Zylindergruppen hat, mit
einer Vielzahl von Abgaskanälen (11A, 11B), die mit den entsprechenden Zylindergruppen verbunden sind;
einer Vielzahl von Abgasreinigungseinheiten (17A, 17B), die in den entsprechenden Abgaskanälen (11A, 11B) angeordnet sind und eingerichtet sind, aus der Brennkraftmaschine (1) ausgestoßene Schwebstoffe zu sammeln;
einer Vielzahl von Regenerationseinrichtungen (20A, 20B), um den entsprechenden Abgasreinigungseinheiten (18A, 18B) Kraftstoff zuzuführen, um die in den entsprechenden Abgasreinigungseinheiten (19A, 19B) abgelagerten Schwebstoffe zu verbrennen, um dadurch die Abgasreinigungseinheiten (19A, 19B) zu regenerieren;
einer Vielzahl von Ablagerungsmengenerfassungseinheiten (21A, 21B), um Schwebstoffablagerungsmengen in den entsprechenden Abgasreinigungseinheiten (19A, 19B) zu erfassen;
einer Regenerationstemperaturbestimmungseinrichtung (25), die beim Regenerieren der Vielzahl von Abgasreinigungseinheiten (19A, 19B) durch die Vielzahl von Regenerationseinrichtungen (20A, 20B) Sollregenerationstemperaturen der entsprechenden Abgasreinigungseinheiten (19A, 19B) basierend auf den durch die entsprechenden Ablagerungsmengenerfassungseinrichtungen (21A, 21B) erfassten Schwebstoffablagerungsmengen in den entsprechenden Abgasreinigungseinheiten (19A, 19B) bestimmt;
einer Steuereinrichtung (25), um jede der Regenerationseinrichtungen (20A, 20B) in Übereinstimmung mit den durch die Regenerationstemperaturbestimmungseinrichtung (25) bestimmten Sollregenerationstemperaturen der entsprechenden Abgasreinigungseinheiten (19A, 19B) zu steuern, wenn die Ablagerungsmengenerfassungseinrichtungen (21A, 21B) erfassen, dass die Schwebstoffablagerungsmengen in den entsprechenden Abgasreinigungseinheiten (19A, 19B) einen Regenerationsstartgrenzwert erreichen; und
einer Bestimmungseinrichtung (25), um zu bestimmen, ob die durch die entsprechenden Ablagerungsmengenerfassungseinrichtungen (21A, 21B) erfassten Schwebstoffablagerungsmengen in den entsprechenden Abgasreinigungseinheiten (19A, 19B) kleiner als eine vorgegebene Menge sind, **dadurch gekennzeichnet, dass**
die Regenerationstemperaturbestimmungseinrichtung (25) eine Temperaturänderungseinrichtung (25) hat, die, wenn die Bestimmungseinrichtung (25) bestimmt, dass die Schwebstoffablagerungsmenge in der Abgasreinigungseinheit (19A, 19B) kleiner ist als die vorgegebene Menge, die Sollregenerationstemperatur der Abgasreinigungseinheit (19A, 19B), für die die Schwebstoffablagerungsmenge als kleiner als die vorgegebene Menge bestimmt ist, auf einen Wert innerhalb eines Temperaturbereichs verringert, der für die Regeneration der Abgasreinigungseinheiten (19A, 19B) verfügbar ist.

2. Abgasreiniger (26) für die Brennkraftmaschine (1) nach Anspruch 1,
wobei die Steuereinrichtung (25) eine Einrichtung (25) hat, die, wenn die Bestimmungseinrichtung (25) bestimmt, dass alle der Schwebstoffablagerungsmengen in den entsprechenden Abgasreinigungseinheiten (19A, 19B) kleiner als die vorgegebene Menge sind, die Regenerationseinrichtungen (20A, 20B) steuert, um Kraftstoffzufuhren zu den entsprechenden Abgasreinigungseinheiten (19A, 19B) zeitgleich zu beenden.

3. Abgasreiniger (26) für die Brennkraftmaschine (1) nach Anspruch 1 oder 2,
wobei, wenn die Bestimmungseinrichtung (25) bestimmt, dass die Schwebstoffablagerungsmenge in der Abgasreinigungseinheit (19A, 19B) größer als die vorgegebene Menge ist, die Regenerationstemperaturbestimmungseinrichtung (25) die Sollregenerationstemperatur der Abgasreinigungseinheit (19A, 19B) in Übereinstimmung mit der Schwebstoffablagerungsmenge in der Abgasreinigungseinheit (19A, 19B) festlegt.

4. Abgasreiniger (26) für die Brennkraftmaschine (1) nach Anspruch 3,
wobei, wenn die Bestimmungseinrichtung (25) bestimmt, dass die Schwebstoffablagerungsmenge in der Abgasreinigungseinheit (19A, 19B) kleiner als die vorgegebene Menge ist, die Temperaturänderungseinrichtung (25) die Sollregenerationstemperatur der Abgasreinigungseinheit (19A, 19B), für die die Schwebstoffablagerungsmenge als kleiner als die vorgegebene Menge bestimmt ist, auf eine niedrigste Temperatur zum Verbrennen der Schwebstoffe verringert.

## Revendications

1. Epurateur de gaz d'échappement (26) pour un moteur à combustion interne (1) ayant une pluralité de groupes de cylindres, comprenant :
une pluralité de passages d'échappement (11A, 11B) reliés aux groupes de cylindres respectifs ;
une pluralité d'unités d'épuration de gaz d'échappement (17A, 17B) agencées dans les passages d'échappement respectifs (11A, 11B) et configurées pour collecter une matière particulaire déchargée à partir du moteur à combustion interne (1) ;
une pluralité de moyens de régénération (20A, 20B) destinés à alimenter les unités d'épuration de gaz d'échappement respectives (18A, 18A) en carburant pour brûler la matière particulaire accumulée dans les unités d'épuration de gaz d'échappement respectives (19A, 19B), ce qui permet de régénérer les unités d'épuration de gaz d'échappement (19A, 19B) ;
une pluralité de moyens de détection de quantité d'accumulation (21A, 21B) destinés à détecter des quantités d'accumulation de matière particulaire dans les unités d'épuration de gaz d'échappement respectives (19A, 19B) ;
un moyen de détermination de température de régénération (25) qui détermine, lors de la régénération de la pluralité d'unités d'épuration de gaz d'échappement (19A, 19B) par la pluralité de moyens de régénération (20A, 20B), des températures de régénération cibles des unités d'épuration de gaz d'échappement respectives (19A, 19B), sur la base des quantités d'accumulation de matière particulaire dans les unités d'épuration de gaz d'échappement respectives (19A, 19B) détectées par les moyens de détection de quantité d'accumulation respectifs (21A, 21B) ;
un moyen de commande (25) destiné à commander chacun des moyens de régénération (20A, 20B) en fonction des températures de régénération cibles des unités d'épuration de gaz d'échappement respectives (19A, 19B) déterminées par le moyen de détermination de température de régénération (25), lorsque les moyens de détection de quantité d'accumulation (21A, 21B) détectent que les quantités d'accumulation de matière particulaire dans les unités d'épuration de gaz d'échappement respectives (19A, 19B) atteignent un seuil de début de régénération ; et
un moyen de détermination (25) destiné à déterminer si les quantités d'accumulation de matière particulaire dans les unités d'épuration de gaz d'échappement respectives (19A, 19B) détectées par les moyens de détection de quantité d'accumulation respectifs (21A, 21B) sont inférieures à une quantité prédéterminée, **caractérisé en ce que**
le moyen de détermination de température de régénération (25) a un moyen de changement de température (25) qui diminue, lorsque le moyen de détermination (25) détermine que la quantité d'accumulation de matière particulaire dans l'unité d'épuration de gaz d'échappement (19A, 19B) est inférieure à la quantité prédéterminée, la température de régénération cible de l'unité d'épuration de gaz d'échappement (19A, 19B) pour laquelle la quantité d'accumulation de matière particulaire est déterminée comme étant inférieure à la quantité prédéterminée, jusqu'à une plage de température disponible pour la régénération des unités d'épuration de gaz d'échappement (19A, 19B).

2. Epurateur de gaz d'échappement (26) pour le moteur à combustion interne (1) selon la revendication 1,
dans lequel le moyen de commande (25) a un moyen (25) qui commande, lorsque le moyen de détermination (25) détermine que la totalité des quantités d'accumulation de matière particulaire dans les unités d'épuration de gaz d'échappement respectives (19A, 19B) sont inférieures à la quantité prédéterminée, les moyens de régénération (20A, 20B) de manière à mettre fin simultanément à l'alimentation des unités d'épuration de gaz d'échappement respectives (19A, 19B) en carburant.

3. Epurateur de gaz d'échappement (26) pour le moteur à combustion interne (1) selon la revendication 1 ou 2,
dans lequel, lorsque le moyen de détermination (25) détermine que la quantité d'accumulation de matière particulaire dans l'unité d'épuration de gaz d'échappement (19A, 19B) est supérieure à la quantité prédéterminée, le moyen de détermination de température de régénération (25) règle la température de régénération cible de l'unité d'épuration de gaz d'échappement (19A, 19B) en fonction de la quantité d'accumulation de matière particulaire dans ladite unité d'épuration de gaz d'échappement (19A, 19B).

4. Epurateur de gaz d'échappement (26) pour le moteur à combustion interne (1) selon la revendication 3,
dans lequel, lorsque le moyen de détermination (25) détermine que la quantité d'accumulation de matière particulaire dans l'unité d'épuration de gaz d'échappement (19A, 19B) est inférieure à la quantité prédéterminée, le moyen de changement de température (25) diminue la température de régénération cible de l'unité d'épuration de gaz d'échappement (19A, 19B) pour laquelle la quantité d'accumulation de matière particulaire est déterminée comme étant inférieure à la quantité prédéterminée, jusqu'à la température la plus basse pour brûler la matière particulaire.
